# EUROPÄISCHE PATENTSCHRIFT

(11) **EP 2 777 149 B1**
(45) Veröffentlichungstag und Bekanntmachung des Hinweises auf die Patenterteilung: **14.08.2019**
(21) Anmeldenummer: 12791092.5
(22) Anmeldetag: 02.11.2012
(51) Int. Cl.: H02P 29/00

(54) **VERFAHREN ZUR STEUERUNG EINES MOTORS MITTELS PULSWEITENMODULATION (PWM)**
METHOD FOR CONTROLLING A MOTOR USING PULSE WIDTH MODULATION (PWM)
PROCÉDÉ DE COMMANDE D'UN MOTEUR PAR MODULATION D'IMPULSIONS EN LARGEUR (MIL)

(30) Priorität: 09.11.2011 DE 102011118044
(43) Veröffentlichungstag der Anmeldung: 17.09.2014
(73) Patentinhaber: Audi AG, 85045 Ingolstadt (DE); Conti Temic Microelectronic GmbH, 90411 Nürnberg (DE)
(72) Erfinder: SCHWANTNER, Bernhard, 85072 Eichstätt (DE); KÄUFL, Georg, 93351 Painten (DE)
(74) Vertreter: Brandt, Kai
(86) Internationale Anmeldenummer: PCT/EP2012/004583
(87) Internationale Veröffentlichungsnummer: WO 2013/068087

(56) Entgegenhaltungen:
- JP-A- 2005 176 529
- JP-A- 2008 118 248
- US-A1- 2004 047 477

## Beschreibung

Die Erfindung betrifft ein Verfahren zur Steuerung eines Motors mittels Pulsweitenmodulation (PWM).

In Fahrzeugen werden Elektromotoren, die mittels Pulsweitenmodulation gesteuert werden, für unterschiedliche Zwecke eingesetzt,. Beispiele dafür sind Lüftermotoren sowie elektrische Verstellsysteme. Einem Elektromotor ist dabei ein Steuergerät zugeordnet, das eine Folge von Rechteckpulsen erzeugt, deren Breite moduliert ist. Auf diese Weise wird die dem Elektromotor zugeführte Energie moduliert, wodurch die Geschwindigkeit gesteuert werden kann. Herkömmliche Steuergeräte werden mit einer konstanten PWM-Frequenz betrieben, die z. B. 18 kHz oder 20 kHz betragen kann.

Es ist bekannt, dass die Ansteuerung von Elektromotoren durch Pulsweitenmodulation Störungen verursacht, die sich z. B. während des Radioempfangs als akustische Störgeräusche äußern. Störungen können als Oberwellen der PWM-Frequenz auftreten und sind insbesondere dann hörbar, wenn die Oberwelle eine ähnliche Frequenz wie ein eingestellter Radiosender hat.

In der WO 97/05716 A1 ist zur Vermeidung von Störungen durch einen Motor, der mittels Pulsweitenmodulation gesteuert wird, vorgeschlagen worden, Filter zur Verringerung der Funkinterferenzen zu verwenden. Als Filter werden Kondensatoren verwendet.

Daneben ist die Verwendung von Spulen bekannt, die zusätzlich zu Kondensatoren in den Steuergeräten angeordnet sind. Allerdings sind derartige EMV-Maßnahmen kostspielig und benötigen einen großen Bauraum auf der Platine, sie sind jedoch teilweise nicht ausreichend wirksam.

Der Erfindung liegt daher die Aufgabe zugrunde, ein Verfahren zur Steuerung eines Motors mittels Pulsweitenmodulation anzugeben, das eine verbesserte Reduzierung von Störungen ermöglicht.

Zur Lösung dieser Aufgabe ist ein Verfahren der eingangs genannten Art mit den folgenden Schritten vorgesehen: Messen der PWM-Frequenz; Feststellen der Trägerfrequenz eines eingestellten Radiosenders; Abgleichen der PWM-Frequenz an die Trägerfrequenz des Radiosenders, derart, dass ein ganzzahliges Vielfaches der PWM-Frequenz der Trägerfrequenz entspricht, wobei die PWM-Frequenz zyklisch geändert wird, wenn die Differenz zwischen dem Vielfachen der PWM-Frequenz und der Trägerfrequenz des Radiosenders einen festgelegten Grenzwert überschreitet, oder dass ein ganzzahliges Vielfaches der PWM-Frequenz in der Mitte zwischen zwei Trägerfrequenzen liegt.

Der Erfindung liegt die Erkenntnis zugrunde, dass unerwünschte Störungen vermieden werden können, wenn die Betriebsfrequenz des Steuergeräts, mit der der Motor gesteuert wird, die nachfolgend als PWM-Frequenz bezeichnet wird, mit der Trägerfrequenz übereinstimmt, beziehungsweise wenn ein Vielfaches der PWM-Frequenz mit der Trägerfrequenz übereinstimmt. Sofern Oberwellen der PWM-Frequenz exakt einem Vielfachen der Trägerfrequenz entsprechen, sind sie nicht hörbar, da sie auf der Trägerfrequenz liegen. Erfindungsgemäß wird somit die PWM-Frequenz geringfügig nachjustiert, bis sie oder ein Vielfaches der PWM-Frequenz mit der Trägerfrequenz übereinstimmt. In dem relevanten Frequenzband erfolgt die Aussendung der Radiowellen mittels Amplitudenmodulation, auf der Trägerfrequenz liegt jedoch kein Audiosignal, dementsprechend sind gegebenenfalls auftretende Störungen, die durch die Pulsweitenmodulation verursacht worden sind, nicht hörbar.

Gemäß einer Weiterbildung des erfindungsgemäßen Verfahrens kann es vorgesehen sein, dass das Abgleichen der PWM-Frequenz mittels eines Vorteilers erfolgt. Das Abgleichen der PWM-Frequenz erfolgt mittels eines Vorteilers (Prescaler) dieser Verfahrensschritt ist in eine entsprechende Software implementiert. Die Nachjustierung erfolgt über einen Parameter in der Software, damit ein Vielfaches der PWM-Frequenz exakt der Trägerfrequenz des Radiosenders entspricht.

Es liegt auch im Rahmen der Erfindung, dass die PWM-Frequenz geringfügig angepasst wird, wenn die Differenz zwischen dem Vielfachen der PWM-Frequenz und der Trägerfrequenz des Radiosenders einen festgelegten Grenzwert überschreitet. Durch eine Feststellung (Messung) der Trägerfrequenz des eingestellten Radiosenders und einem Vergleich mit dem Vielfachen der PWM-Frequenz kann ermittelt werden, ob eine Differenz vorhanden ist, in diesem Fall kann wiederum eine Nachjustierung durch Anpassen der PWM-Frequenz erfolgen. Diese Nachjustierung beziehungsweise Anpassung kann kontinuierlich oder nach dem Verstreichen eines festgelegten Zeitraums oder dann erfolgen, wenn die Differenz einen festgelegten Grenzwert überschritten hat.

Bei dem erfindungsgemäßen Verfahren ist es vorgesehen, dass die PWM-Frequenz zur Anpassung zyklisch geändert wird. Diese zyklischen Änderungen bewirken geringfügige Frequenzänderungen, dazu wird der digitale Prescaler um ein oder zwei Bit zyklisch verändert, es wird somit ein Frequenzsweep durchgeführt. Dadurch wird die Energie des Störsignals auf mehrere benachbarte Frequenzen verteilt. Diese Maßnahme resultiert in einer zusätzlichen Abschwächung eines unter Umständen noch hörbaren Reststörsignals.

Daneben betrifft die Erfindung ein Steuergerät für einen mittels Pulsweitenmodulation (PWM) angesteuerten Elektromotor, mit einem Quarz oder Resonator zum Erzeugen einer PWM-Frequenz.

Das erfindungsgemäße Steuergerät zeichnet sich dadurch aus, dass es zum Vermessen der PWM-Frequenz und zum Anpassen eines ganzzahligen Vielfachen der PWM-Frequenz an die Trägerfrequenz des Radiosenders ausgebildet ist, derart, dass ein ganzzahliges Vielfaches der PWM-Frequenz der Trägerfrequenz entspricht, wobei eine zyklische Änderung der PWM-Frequenz erfolgt, wenn die Differenz zwischen dem Vielfachen der PWM-Frequenz und der Trägerfrequenz des Radiosenders einen festgelegten Grenzwert überschreitet, oder dass ein ganzzahliges Vielfaches der PWM-Frequenz in der Mitte zwischen zwei Trägerfrequenzen liegt. Das erfindungsgemäße Steuergerät umfasst auch solche Ausgestaltungen, bei denen die Messung beziehungsweise Erfassung der Trägerfrequenz außerhalb des Steuergeräts in einem separaten Bauteil erfolgt.

Daneben umfasst die Erfindung ein Kraftfahrzeug. Das erfindungsgemäße Kraftfahrzeug umfasst ein Steuergerät der beschriebenen Art, das zur Durchführung des beschriebenen Verfahrens ausgebildet ist.

Weitere Vorteile und Einzelheiten der Erfindung sind in den Unteransprüchen beschrieben.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: die wesentlichen Schritte des erfindungsgemäßen Verfahrens in einem Ablaufdiagramm;
- Fig. 2: ein erfindungsgemäßes Steuergerät;
- Fig. 3: ein Diagramm, bei dem der Energiegehalt über der Frequenz aufgetragen ist; und
- Fig. 4: ein weiteres Diagramm, bei dem der Energiegehalt über der Frequenz aufgetragen ist.

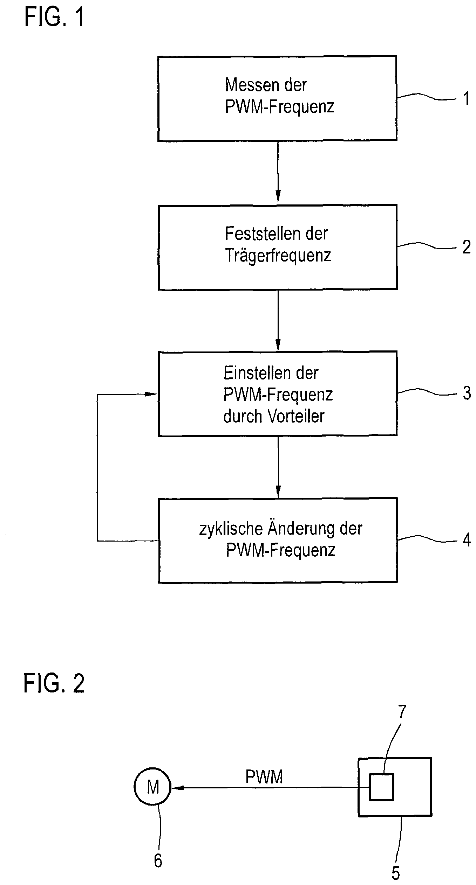

Fig. 1 ist ein Ablaufdiagramm und zeigt die wesentlichen Schritte des Verfahrens zur Steuerung eines Motors mittels Pulsweitenmodulation (PWM). Durch das Verfahren sollen hörbare Störungen, die z. B. beim Radioempfang wahrgenommen werden, beseitigt werden. Derartige Störungen können durch Elektromotoren verursacht werden, die mittels Pulsweitenmodulation gesteuert werden. Bei der Pulsweitenmodulation werden Signale mit einer Frequenz von z. B. 18 kHz oder 20 kHz erzeugt, um eine bestimmte Motordrehzahl und ein Drehmoment einzustellen.

Im Schritt 1 des Verfahrens wird die PWM-Frequenz vermessen, das heißt diejenige Frequenz, mit der der Motor angesteuert wird. Die Erzeugung des Taktsignals erfolgt zwar grundsätzlich exakt durch einen Quarz oder einen Resonator, durch Toleranzen, Temperatureinflüsse oder Bauteilalterung kann es jedoch zu einer zumindest geringen Abweichung der Sollfrequenz von z. B. 18 kHz oder 20 kHz kommen. Dementsprechend wird im Schritt 1 die aktuelle Ist-Frequenz exakt gemessen.

Im Schritt 2 wird die Radiofrequenz eines aktuell eingestellten Radiosenders durch eine Messung festgestellt. Die Radiofrequenz wird mit derselben Genauigkeit wie die PWM-Frequenz bestimmt. Bei Rundfunksignalen, die amplitudenmoduliert ausgesendet werden, wird insbesondere die Trägerfrequenz ermittelt, die z. B. 180 kHz im Langwellenband (LW) beträgt.

Im Schritt 3 erfolgt das Einstellen der PWM-Frequenz durch einen Vorteiler. Der Vorteiler ist Bestandteil eines Steuergeräts, das den Elektromotor mittels PWM ansteuert. Die Einstellung der PWM-Frequenz erfolgt derart, dass ein ganzzahliges Vielfaches der PWM-Frequenz der Trägerfrequenz entspricht. Die PWM-Frequenz wird somit an die Trägerfrequenz angeglichen, so dass gegebenenfalls auftretende Oberwellen der PWM-Frequenz exakt die Trägerfrequenz des ausgesendeten Rundfunksignals treffen. Wenn die Trägerfrequenz z. B. 180 kHz beträgt, wird die PWM-Frequenz auf 18 kHz eingestellt, die Trägerfrequenz entspricht dann dem 10-fachen der PWM-Frequenz. Naturgemäß werden bei der Ansteuerung des Elektromotors durch Pulsweitenmodulation Störungen in Form von Oberwellen erzeugt, die normalerweise zu hörbaren Störungen beim Radioempfang führen. Wenn die PWM-Frequenz jedoch so eingestellt ist, dass ihre Oberwelle 180 kHz beträgt und mit der Trägerfrequenz des Rundfunksignals übereinstimmt, entstehen keine hörbaren Störungen, da die abgeglichene Oberwelle auf der Trägerfrequenz liegt. Das Audiosignal wird bei Amplitudenmodulation in Frequenzbereichen oberhalb und unterhalb der Trägerfrequenz übertragen, diese Frequenzbereiche sind ungestört, da dort keine Oberwelle der PWM-Frequenz auftritt.

Im Schritt 4 des Verfahrens erfolgt eine zyklische Anpassung der PWM-Frequenz, so dass eine kontinuierliche Anpassung der PWM-Frequenz an die Trägerfrequenz erfolgt. Ebenso werden dadurch unterschiedliche Empfangsbedingungen kompensiert, so dass unabhängig vom momentanen Aufenthaltsort eines Fahrzeugs ein störungsfreier Empfangs gewährleistet ist. Die im Schritt 4 des Verfahrens vorgesehene zyklische Anpassung der PWM-Frequenz ist erfindungsgemäß. Es ist alternativ auch möglich, dass Schritt 3, das Einstellen der PWM-Frequenz durch den Vorteiler, in festgelegten Zeitabständen durchgeführt wird. Eine zyklische Änderung der PWM-Frequenz zur Anpassung der PWM-Frequenz an die Trägerfrequenz erfolgt dann, wenn keine exakte Anpassung der PWM-Frequenz an die Trägerfrequenz möglich ist. In diesem Fall wird die Energie des Störsignals durch einen Frequenzsweep auf mehrere Frequenzen verteilt, wodurch ein gegebenenfalls noch vorhandenes Reststörsignal, das beim Radioempfang hörbar ist, zusätzlich abgeschwächt wird. Anschließend wird das Verfahren mit dem Schritt 3 fortgesetzt, so dass die PWM-Frequenz erneut eingestellt wird.

Fig. 2 zeigt schematisch ein Steuergerät 5, um einen Elektromotor 6 mittels Pulsweitenmodulation anzusteuern. Das Steuergerät 5 umfasst einen Vorteiler 7 (Prescaler) um ein Vielfaches der PWM-Frequenz auf die Trägerfrequenz abzustimmen. Das Steuergerät 5 ist auch zum Messen der PWM-Frequenz und zum Feststellen der Radiofrequenz beziehungsweise der Trägerfrequenz des Rundfunksignals ausgebildet.

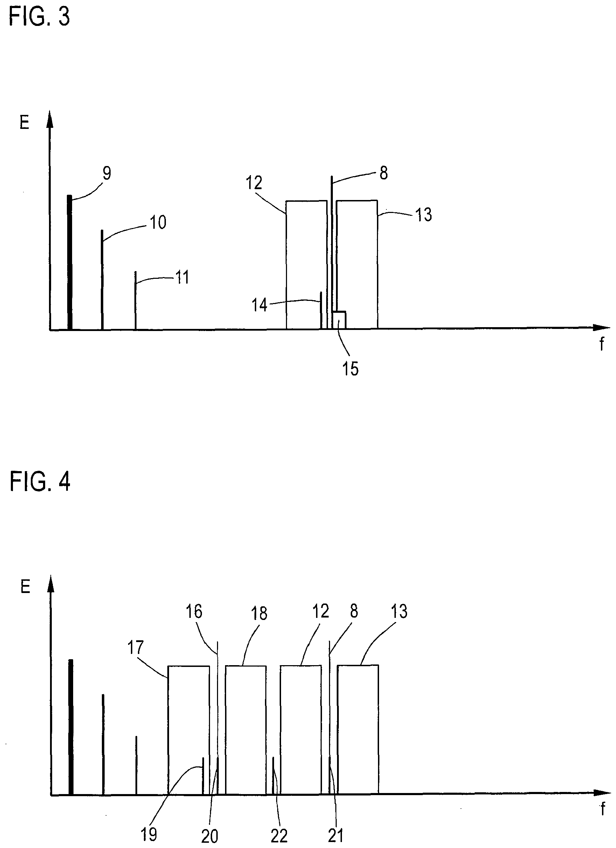

Fig. 3 ist ein Diagramm, in dem der Energiegehalt (E) der PWM-Frequenz und des ausgestrahlten Rundfunksignals über der Frequenz (f) aufgetragen ist. In dem in Fig. 3 gezeigten Ausführungsbeispiel beträgt die im Schritt 2 gemessene Trägerfrequenz 8 eines Radiosignals 180 kHz im LW-Band. Die PWM-Frequenz wird im Schritt 1 des Verfahrens genau durch eine Messung erfasst und im Schritt 3 so eingestellt, dass ein Vielfaches der PWM-Frequenz 9 exakt der Trägerfrequenz 8 entspricht. Normalerweise weicht die PWM-Frequenz 9 zumindest geringfügig von einem Sollwert, bei dem keine Störungen auftreten, ab. In diesem Fall erfolgt durch den Vorteiler 7 eine Anpassung, um die PWM-Frequenz beispielsweise von 17,95 kHz auf 18 kHz zu verändern. Wenn eine exakte Einstellung beziehungsweise Anpassung nicht möglich ist, erfolgt durch den digitalen Vorteiler 7 eine zyklische Anpassung um ein oder zwei Bit, wodurch das gesuchte Vielfache der PWM-Frequenz 9, das der Trägerfrequenz 8 entspricht, näherungsweise erreicht wird. In Fig. 3 sind Oberwellen 10, 11 der PWM-Frequenz 9 dargestellt, die jeweils ganzzahlige Vielfache der PWM-Frequenz 9 sind. Ebenso ist in Fig. 3 gezeigt, dass das Audiosignal in Frequenzbereichen 12, 13 unterhalb und oberhalb der Trägerfrequenz 8 ausgesendet wird.

Ohne einen Abgleich durch das beschriebene Verfahren würden durch die PWM-Frequenz 9 verursachte Oberwellen 14 auftreten, die nicht mit der Trägerfrequenz 8 zusammenfallen, die in Fig. 3 gezeigte Oberwelle 14 wäre daher bei eingeschaltetem Radio als Störung zu hören. Durch das erfindungsgemäße Verfahren können störende Oberwellen jedoch zumindest beträchtlich verringert werden, so dass allenfalls noch Oberwellen 15 übrigbleiben, deren Energiegehalt deutlich gegenüber der Oberwelle 14 verringert ist. Da sich die Oberwelle 15 nahezu auf der Trägerfrequenz 8 befindet, ist sie nicht hörbar.

Fig. 4 zeigt ein ähnliches Diagramm wie Fig. 3, bei dem der Energiegehalt über der Frequenz aufgetragen ist. Anders als in dem vorangehenden Ausführungsbeispiel umfasst ein ausgestrahltes Rundfunksignal zwei Trägerfrequenzen 8, 16. Der Trägerfrequenz 8 sind Frequenzbereiche 12, 13 unterhalb und oberhalb der Trägerfrequenz 8 zugeordnet. Der Trägerfrequenz 16 ist ein unterer Frequenzbereich 17 und ein oberer Frequenzbereich 18 zugeordnet, in denen das Audiosignal übertragen wird.

Eine Oberwelle 19, die innerhalb des Frequenzbereichs 17 liegt, ist während des Radioempfangs als Störung hörbar. Nicht hörbar sind jedoch Oberwellen 20, 21, die mit den Trägerfrequenzen 8, 16 zusammenfallen bzw. in einem schmalen Frequenzbereich um die Trägerfrequenzen 8, 16 herum liegen. Ebenso wenig ist eine Oberwelle 22 als Störung zu hören, deren Frequenz in der Mitte zwischen den beiden Trägerfrequenzen 8, 16 liegt. Ein Abgleich der PWM-Frequenz kann somit auch derart erfolgen, dass eine Oberwelle 22 genau zwischen zwei Trägerfrequenzen 8, 16 gelegt wird, vorausgesetzt, dass zumindest ein schmaler Frequenzbereich vorhanden ist, der nicht für die Aussendung von Audiosignalen benötigt wird. In dem in Fig. 4 gezeigten Ausführungsbeispiel befindet sich zwischen den Frequenzbereichen 12, 18 eine "Lücke", sodass die Oberwelle 22 so abgeglichen werden kann, dass sie genau in dieser Lücke liegt, um unerwünschte akustische Störungen zu vermeiden.

## Patentansprüche

1. Verfahren zur Steuerung eines Motors (6) mittels Pulsweitenmodulation (PWM), **gekennzeichnet durch** die folgenden Schritte:
- Messen der PWM-Frequenz (9);
- Feststellen einer Trägerfrequenz (8) oder zweier Trägerfrequenzen (8, 16) eines eingestellten Radiosenders;
- Abgleichen der PWM-Frequenz (9) an die Trägerfrequenz (8) des Radiosenders, derart, dass ein ganzzahliges Vielfaches der PWM-Frequenz (9) der Trägerfrequenz (8) entspricht, wobei die PWM-Frequenz (9) zyklisch geändert wird, wenn die Differenz zwischen dem Vielfachen der PWM-Frequenz und der Trägerfrequenz (8, 16) des Radiosenders einen festgelegten Grenzwert überschreitet,
oder dass ein ganzzahliges Vielfaches der PWM-Frequenz (9) in der Mitte zwischen zwei Trägerfrequenzen (8, 16) liegt.

2. Verfahren nach Anspruch1, wobei dass ein ganzzahliges Vielfaches der PWM-Frequenz (9) in der Mitte zwischen zwei Trägerfrequenzen (8, 16) liegt,
**dadurch gekennzeichnet,**
**dass** die PWM-Frequenz (9) zyklisch geändert wird, wenn die Differenz zwischen dem Vielfachen der PWM-Frequenz und der Trägerfrequenz (8, 16) des Radiosenders einen festgelegten Grenzwert überschreitet.

3. Verfahren nach Anspruch 1 oder 2,
**dadurch gekennzeichnet,**
**dass** das Abgleichen der PWM-Frequenz (9) mittels eines Vorteilers (7) erfolgt.

4. Verfahren nach einem der vorangehenden Ansprüche,
**dadurch gekennzeichnet,**
**dass** die PWM-Frequenz (9) zur zyklischen Änderung um ein oder zwei Bit geändert wird.

5. Verfahren nach einem der vorangehenden Ansprüche,
**dadurch gekennzeichnet,**
**dass** das Abgleichen der Frequenz in festgelegten Zeitabständen erfolgt.

6. Steuergerät für einen mittels Pulsweitenmodulation (PWM) angesteuerten Elektromotor (6), mit einem Quarz oder Resonator zum Erzeugen einer PWM-Frequenz, **gekennzeichnet dadurch, daß** das Steuergerät (5) zum Messen einer Trägerfrequenz (8) oder zweier Trägerfrequenzen (8, 16) und zum Abgleichen der PWM-Frequenz (9) an die Trägerfrequenz (8) eines Radiosenders ausgebildet ist, derart, dass ein ganzzahliges Vielfaches der PWM-Frequenz (9) der Trägerfrequenz (8) entspricht, wobei eine zyklische Änderung der PWM-Frequenz (9) erfolgt, wenn die Differenz zwischen dem Vielfachen der PWM-Frequenz (9) und der Trägerfrequenz (8, 16) des Radiosenders einen festgelegten Grenzwert überschreitet, oder dass ein ganzzahliges Vielfaches der PWM-Frequenz (9) in der Mitte zwischen zwei Trägerfrequenzen (8, 16) liegt.

7. Steuergerät nach Anspruch 6, wobei ein ganzzahliges Vielfaches der PWM-Frequenz (9) in der Mitte zwischen zwei Trägerfrequenzen (8, 16) liegt
**dadurch gekennzeichnet,**
**dass** eine zyklische Änderung der PWM-Frequenz (9) erfolgt, wenn die Differenz zwischen dem Vielfachen der PWM-Frequenz (9) und der Trägerfrequenz (8, 16) des Radiosenders einen festgelegten Grenzwert überschreitet

8. Steuergerät nach Anspruch 6 oder 7,
**dadurch gekennzeichnet,**
**dass** es einen Vorteiler (7) zum Abgleichen der PWM-Frequenz (9) aufweist.

9. Kraftfahrzeug,
**dadurch gekennzeichnet,**
**dass** es ein Steuergerät (5) nach einem der Patentansprüche 6 bis 8 umfasst.

## Claims

1. Method for controlling a motor (6) using pulse width modulation (PWM), **characterised by** the following steps:
- measuring the PWM frequency (9);
- determining one carrier frequency (8) or two carrier frequencies (8, 16) of a set radio transmitter;
- trimming the PWM frequency (9) to the carrier frequency (8) of the radio transmitter, so that an integer multiple of the PWM frequency (9) corresponds to the carrier frequency (8), the PWM frequency (9) being cyclically changed when the difference between the multiple of the PWM frequency and the carrier frequency (8, 16) of the radio transmitter exceeds a defined limit value,
or so that an integer multiple of the PWM frequency (9) lies in the middle between the two carrier frequencies (8, 16).

2. Method according to claim 1, wherein an integer multiple of the PWM frequency (9) lies in the middle between the two carrier frequencies (8, 16),
**characterised in that**
the PWM frequency (9) is cyclically changed when the difference between the multiple of the PWM frequency and the carrier frequency (8, 16) of the radio transmitter exceeds a defined limit value.

3. Method according to claim 1 or 2,
**characterised in that**
the PWM frequency (9) is trimmed using a prescaler (7).

4. Method according to any of the preceding claims,
**characterised in that**
the PWM frequency (9) is changed by one or two bits for cyclical change purposes.

5. Method according to any of the preceding claims,
**characterised in that**
the frequency is trimmed at defined time intervals.

6. Control device for an electric motor (6) controlled using pulse width modulation (PWM), comprising a quartz crystal or resonator for generating a pulse width modulation (PWM) signal, **characterised in that** the control device (5) is designed to measure one carrier frequency (8) or two carrier frequencies (8, 16), so that an integer multiple of the PWM frequency (9) corresponds to the carrier frequency (8), the PWM frequency (9) being cyclically changed when the difference between the multiple of the PWM frequency (9) and the carrier frequency (8, 16) of the radio transmitter exceeds a defined limit value, or so that an integer multiple of the PWM frequency (9) lies in the middle between the two carrier frequencies (8, 16).

7. Control device according to claim 6, wherein an integer multiple of the PWM frequency (9) lies in the middle between two carrier frequencies (8, 16),
**characterised in that**
the PWM frequency (9) is cyclically changed when the difference between the multiple of the PWM frequency (9) and the carrier frequency (8, 16) of the radio transmitter exceeds a defined limit value.

8. Control device according to claim 6 or 7,
**characterised in that**
it has a prescaler (7) for trimming the PWM frequency (9).

9. Motor vehicle,
**characterised in that**
it comprises a controller (5) according to any of claims 6 to 8.

## Revendications

1. Procédé de commande d'un moteur (6) au moyen d'une modulation d'impulsions en durée (MID), **caractérisé par** les étapes suivantes :
- mesure de la fréquence MID (9) ;
- détermination d'une fréquence porteuse (8) ou de deux fréquences porteuses (8, 16) d'un émetteur radio réglé ;
- alignement de la fréquence MID (9) sur la fréquence porteuse (8) de l'émetteur radio de telle sorte qu'un multiple entier de la fréquence MID (9) correspond à la fréquence porteuse (8), laquelle fréquence MID (9) est modifiée cycliquement lorsque la différence entre le multiple de la fréquence MID et la fréquence porteuse (8, 16) de l'émetteur radio dépasse une valeur limite spécifiée,
ou qu'un multiple entier de la fréquence MID (9) se trouve au milieu entre les deux fréquences porteuses (8, 16).

2. Procédé selon la revendication 1, dans lequel un multiple entier de la fréquence MID (9) se trouve au milieu entre les deux fréquences porteuses (8, 16), **caractérisé en ce que**
la fréquence MID (9) est modifiée cycliquement lorsque la différence entre le multiple de la fréquence MID et la fréquence porteuse (8, 16) de l'émetteur radio dépasse une valeur limite spécifiée.

3. Procédé selon la revendication 1 ou 2, **caractérisé en ce que** l'alignement de la fréquence MID (9) s'effectue au moyen d'un prédiviseur (7).

4. Procédé selon l'une quelconque des revendications précédentes, **caractérisé en ce que**, pour la modification cyclique, la fréquence MID (9) est modifiée d'un ou deux bits.

5. Procédé selon l'une quelconque des revendications précédentes, **caractérisé en ce que** l'alignement de la fréquence s'effectue à des intervalles de temps spécifiés.

6. Appareil de commande pour un moteur électrique (6) commandé au moyen d'une modulation d'impulsions en durée (MID), avec un quartz ou résonateur destiné à la production d'une fréquence MID,
**caractérisé en ce que** l'appareil de commande (5) est conçu pour mesurer une fréquence porteuse (8) ou deux fréquences porteuses (8, 16) et pour aligner la fréquence MID (9) sur la fréquence porteuse (8) d'un émetteur radio de telle sorte qu'un multiple entier de la fréquence MID (9) correspond à la fréquence porteuse (8), une modification cyclique de la fréquence MID (9) s'effectuant lorsque la différence entre le multiple de la fréquence MID (9) et la fréquence porteuse (8, 16) de l'émetteur radio dépasse une valeur limite spécifiée, ou qu'un multiple entier de la fréquence MID (9) se trouve au milieu entre les deux fréquences porteuses (8, 16).

7. Appareil de commande selon la revendication 6, dans lequel un multiple entier de la fréquence MID (9) se trouve au milieu entre les deux fréquences porteuses (8, 16), **caractérisé en ce qu'**une modification cyclique de la fréquence MID (9) s'effectue lorsque la différence entre le multiple de la fréquence MID (9) et la fréquence porteuse (8, 16) de l'émetteur radio dépasse une valeur limite spécifiée.

8. Appareil de commande selon la revendication 6 ou 7, **caractérisé en ce qu'**il comporte un prédiviseur (7) pour l'alignement de la fréquence MID (9).

9. Véhicule automobile, **caractérisé en ce qu'**il comprend un appareil de commande (5) selon l'une quelconque des revendications 6 à 8.
